(19) Europäisches Patentamt
European Patent Office
Office européen des brevets

(11) EP 4 191 726 A1

(12) EUROPEAN PATENT APPLICATION
published in accordance with Art. 153(4) EPC

(43) Date of publication:
07.06.2023 Bulletin 2023/23

(21) Application number: 21869806.6

(22) Date of filing: 17.09.2021

(51) International Patent Classification (IPC):
*H01M 10/0565* (2010.01) *H01M 10/052* (2010.01)

(52) Cooperative Patent Classification (CPC):
H01M 10/052; H01M 10/0565; Y02E 60/10

(86) International application number:
PCT/KR2021/012871

(87) International publication number:
WO 2022/060184 (24.03.2022 Gazette 2022/12)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 18.09.2020 KR 20200120923

(71) Applicant: LG Energy Solution, Ltd.
Seoul 07335 (KR)

(72) Inventors:
- LEE, Jung-Hoon
Daejeon 34122 (KR)
- KANG, Yong-Hee
Daejeon 34122 (KR)
- RYU, Ji-Hoon
Daejeon 34122 (KR)
- YOON, Yeo-Min
Daejeon 34122 (KR)
- LEE, Jae-Won
Daejeon 34122 (KR)
- JUNG, Bum-Young
Daejeon 34122 (KR)

(74) Representative: Hoffmann Eitle
Patent- und Rechtsanwälte PartmbB
Arabellastraße 30
81925 München (DE)

# (54) COMPOSITION FOR GEL POLYMER ELECTROLYTE, AND LITHIUM SECONDARY BATTERY COMPRISING GEL POLYMER ELECTROLYTE FORMED THEREFROM

(57) The present disclosure relates to a composition for a gel polymer electrolyte, including a lithium salt, a non-aqueous organic solvent, a polymerization initiator and a crosslinking agent, a gel polymer electrolyte formed by polymerizing the composition for a gel polymer electrolyte, and a lithium secondary battery including the same. According to an embodiment of the present disclosure, it is possible to inhibit the evaporation of a non-aqueous organic solvent by using a crosslinking agent, and to inhibit ignition propagation upon the ignition of a cell.

FIG. 4

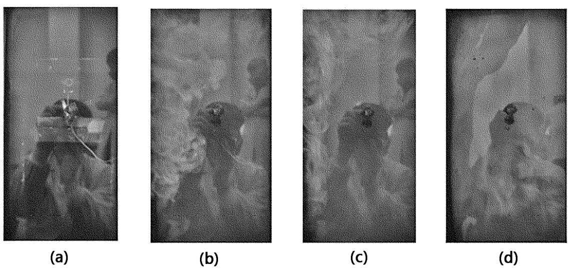




Processed by Luminess, 75001 PARIS (FR)

## Description

### TECHNICAL FIELD

The present disclosure relates to a composition for a gel polymer electrolyte and a lithium secondary battery including the same.

The present application claims priority to Korean Patent Application No. 10-2020-0120923 filed on September 18, 2020 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Such lithium secondary batteries may be classified into lithium-ion batteries using a liquid electrolyte and lithium polymer batteries using a polymer electrolyte, depending on the electrolyte used specially therefor.

Lithium-ion batteries have an advantage of high capacity, but have a risk of electrolyte leakage and explosion due to the use of a lithium salt-containing liquid electrolyte. Therefore, lithium-ion batteries are disadvantageous in that they require a complicated battery design in order to provide against such a disadvantage.

On the other hand, lithium polymer batteries use a solid polymer electrolyte or an electrolyte-containing gel polymer electrolyte, and thus show improved safety and may have flexibility. Therefore, lithium polymer batteries may be developed into various types, such as compact batteries or thin film-type batteries.

Recently, as battery safety has become a big issue, it has been required for such lithium polymer batteries to have higher safety. Particularly, when a cell ignites to cause additional damages to the adjacent cell and continuous ignition in a module or a pack, a big fire accident may occur. Therefore, there is a need for a technology capable of inhibiting ignition propagation caused by the ignition of a cell.

### DISCLOSURE

### Technical Problem

The present disclosure is designed to solve the problems of the related art, and therefore the present disclosure is directed to providing a battery which can inhibit ignition propagation caused by the ignition of a cell.

The present disclosure is also directed to inhibiting electrolyte decomposition by stabilizing radicals that may be generated upon the collapse of a positive electrode or ignition of a cell.

### Technical Solution

In one aspect of the present disclosure, there is provided a composition for a gel polymer electrolyte according to any one of the following embodiments.

According to the first embodiment, there is provided a composition for a gel polymer electrolyte, including: a lithium salt; a non-aqueous organic solvent; a polymerization initiator; at least one polymerizable compound selected from the group consisting of a polymerizable monomer, oligomer and copolymer; and a compound represented by the following Chemical Formula 1, wherein the compound represented by Chemical Formula 1 is present in an amount of 10 vol% or more, based on the total volume of the non-aqueous organic solvent and the compound represented by Chemical Formula 1:

[Chemical Formula 1]

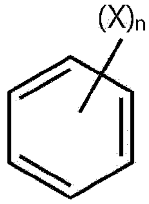

(wherein X is at least one halogen atom selected from the group consisting of F, Cl, Br and I, and n is an integer of 1-6).

According to the second embodiment, there is provided the composition for a gel polymer electrolyte as defined in the first embodiment, wherein the compound represented by Chemical Formula 1 is at least one selected from the group consisting of fluorobenzene, chlorobenzene, bromobenzene, iodobenzene, difluorobenzene, dichlorobenzene, dibromobenzene, diiodobenzene, trifluorobenzene, trichlorobenzene, tribromobenzene, triiodobenzene, tetrafluorobenzene, tetrachlorobenzene, tetrabromobenzene, tetraiodobenzene, fluorochlorobenzene, fluorobromobenzene, fluoroiodobenzene, chlorobromobenzene, chloroiodobenzene and bromoiodobenzene.

According to the third embodiment, there is provided the composition for a gel polymer electrolyte as defined in the first or the second embodiment, wherein the compound represented by Chemical Formula 1 is present in an amount of 15-30 vol%, based on the total volume of the non-aqueous organic solvent and the compound represented by Chemical Formula 1.

According to the fourth embodiment, there is provided the composition for a gel polymer electrolyte as defined in the second embodiment, wherein the compound represented by Chemical Formula 1 is fluorobezene, chlorobenzene, bromobenzene or iodobenzene.

According to the fifth embodiment, there is provided the composition for a gel polymer electrolyte as defined in any one of the first to the fourth embodiments, wherein the polymerizable compound has a polymerizable functional group selected from the group consisting of vinyl, epoxy, allyl and (meth)acryl groups, and is a compound that can be converted into a gel phase through polymerization or crosslinking.

According to the sixth embodiment, there is provided the composition for a gel polymer electrolyte as defined in any one of the first to the fifth embodiments, wherein the polymerizable compound has a weight average molecular weight (Mw) of 300-100,000 g/mol.

According to the seventh embodiment, there is provided the composition for a gel polymer electrolyte as defined in any one of the first to the sixth embodiments, wherein the polymerizable compound is present in an amount of 0.01-10 wt%, based on the total weight of the composition for a gel polymer electrolyte.

According to the eighth embodiment, there is provided the composition for a gel polymer electrolyte as defined in any one of the first to the seventh embodiments, wherein the non-aqueous organic solvent includes at least one solvent selected from the group consisting of carbonates, esters and ethers.

According to the ninth embodiment, there is provided the composition for a gel polymer electrolyte as defined in the eighth embodiment, wherein the carbonate solvent is a mixed solvent of a linear carbonate with a cyclic carbonate.

According to the tenth embodiment, there is provided the composition for a gel polymer electrolyte as defined in the ninth embodiment, wherein the cyclic carbonate includes any one selected from ethylene carbonate, propylene carbonate, 1,2-butylene carbonate, 2,3-butylene carbonate, 1,2-pentylene carbonate, 2,3-pentylene carbonate, vinylene carbonate, vinyl ethylene carbonate, fluoroethylene carbonate and halides thereof, or a mixture of two or more of them.

According to the eleventh embodiment, there is provided the composition for a gel polymer electrolyte as defined in the ninth embodiment, wherein the linear carbonate includes any one selected from dimethyl carbonate (DMC), diethyl carbonate (DEC), dipropyl carbonate (DPC), ethyl methyl carbonate (EMC), methyl propyl carbonate (MPC), ethyl propyl carbonate (EPC) and halides thereof, or a mixture of two or more of them.

According to the twelfth embodiment, there is provided the composition for a gel polymer electrolyte as defined in the eighth embodiment, wherein the non-aqueous organic solvent is a mixed solvent of a cyclic carbonate with a linear ester.

According to the thirteenth embodiment, there is provided the composition for a gel polymer electrolyte as defined in the twelfth embodiment, wherein the linear ester includes any one selected from methyl acetate, ethyl acetate, propyl acetate, methyl propionate, ethyl propionate, propyl propionate and butyl propionate, or a mixture of two or more of them.

According to the fourteenth embodiment, there is provided the composition for a gel polymer electrolyte as defined in any one of the first to the thirteenth embodiments, wherein the lithium salt includes $Li^+$, as a cation, and at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$

, $(CF_3SO_2)_2N^-$, $(FSO_2)_2N^-$, $CF_3CF_2(CF_3)_2CO^-$, $(CF_3SO_2)_2CH^-$, $CF_3(CF_2)_7SO_3^-$, $CF_3CO_2^-$, $CH_3CO_2^-$, $SCN^-$ and $(CF_3CF_2SO_2)_2N^-$, as an anion.

In another aspect of the present disclosure, there is provided a gel polymer electrolyte according to the following embodiment.

According to the fifteenth embodiment, there is provided a gel polymer electrolyte formed by polymerizing the composition for a gel polymer electrolyte as defined in any one of the first to the fourteenth embodiments.

In still another aspect of the present disclosure, there is provided a lithium secondary battery according to the following embodiment.

According to the sixteenth embodiment, there is provided a lithium secondary battery including a negative electrode, a positive electrode, a separator interposed between the negative electrode and the positive electrode, and the gel polymer electrolyte as defined in the fifteenth embodiment.

## Advantageous Effects

According to an embodiment of the present disclosure, it is possible to inhibit ignition propagation occurring upon the ignition of a cell by using a compound represented by the following Chemical Formula 1.

According to an embodiment of the present disclosure, it is possible to inhibit electrolyte decomposition that occurs secondarily according to the collapse of an active material.

According to an embodiment of the present disclosure, it is possible to inhibit the evaporation of the above-mentioned compound, while inhibiting ignition propagation effectively at the same time, by using the above-mentioned compound and a crosslinking agent at the same time.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1a to FIG. 1e illustrate the image of the composition for a gel polymer electrolyte prepared according to each of Comparative Examples 1, 4, 5 and 6 and Example 4 or non-aqueous electrolyte, taken in an amount of 5 g, as photographed 3 seconds after it is ignited by using a torch.

FIG. 2(a) to FIG. 2(d) illustrate the image showing the results of the nail penetration test of the battery according to Comparative Example 5.

FIG. 3(a) to FIG. 3(d) illustrate the image showing the results of the nail penetration test of the battery according to Comparative Example 6.

FIG. 4(a) to FIG. 4(d) illustrate the image showing the results of the nail penetration test of the battery according to Example 4.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression ‘a part includes an element’ does not preclude the presence of any additional elements but means that the part may further include the other elements.

As used herein, the terms ’about’, ’substantially’, or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression ‘A and/or B’ means ‘A, B or both of them’.

Specific terms used in the following description are for illustrative purposes and are not limiting. Such terms as ’right’, ’left’, ’top surface’ and ‘bottom surface’ show the directions in the drawings to which they are referred. Such terms

as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

Unless otherwise stated, '*' represents a linkage portion between the same or different atoms or end portions of the chemical formulae.

In addition, as used herein, 'substitution' refers to substitution of at least one hydrogen atom bound to a carbon atom with any element other than hydrogen, unless otherwise stated. For example, 'substitution' refers to substitution with a C1-C5 alkyl group or fluorine atom.

**Composition for Gel Polymer Electrolyte**

In one aspect of the present disclosure, there is provided a composition for a gel polymer electrolyte.

The composition for a gel polymer electrolyte includes: a lithium salt; a non-aqueous organic solvent; a polymerization initiator; at least one polymerizable compound selected from the group consisting of a polymerizable monomer, oligomer and copolymer; and a compound represented by the following Chemical Formula 1, wherein the compound represented by Chemical Formula 1 is present in an amount of 10 vol% or more, based on the total volume of the non-aqueous organic solvent and the compound represented by Chemical Formula 1:

[Chemical Formula 1]

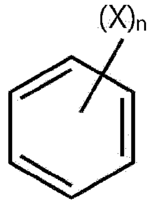

(wherein X is at least one halogen atom selected from the group consisting of F, Cl, Br and I, and n is an integer of 1-6).

Hereinafter, the composition for a gel polymer electrolyte according to the present disclosure will be explained in more detail with reference to the constitution thereof.

**(1) Lithium Salt**

First, in the composition for a gel polymer electrolyte according to an embodiment of the present disclosure, the lithium salt is used as an electrolyte salt in the lithium secondary battery and as a medium for transporting ions. In general, the lithium salt includes $Li^+$, as a cation, and at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CF_3(CF_2)_7SO_3^-$, $CF_3CO_2^-$, $CH_3CO_2^-$, $SCN^-$ and $(CF_3CF_2SO_2)_2N^-$, as an anion.

Such lithium salts may be used alone or in combination. The lithium salt may be used in an amount controlled suitably within a generally applicable range. However, the lithium salt may be used at a concentration of 0.5-2.5 M, particularly 0.9-2.0 M, in the electrolyte in order to obtain an optimized effect of forming a coating film for preventing corrosion on the electrode surface.

Since the composition for a gel polymer electrolyte according to the present disclosure includes an electrolyte salt at 0.5 M or more, it is possible to reduce the resistance caused by depletion of lithium ions during high-rate charge/discharge. Furthermore, when the concentration of the electrolyte salt in the composition for a gel polymer electrolyte according to the present disclosure satisfies the above-defined range, it is possible to ensure high lithium cation ($Li^+$) ion transportability (i.e. cation transference number) by virtue of an increase in lithium cations present in the composition for a gel polymer electrolyte, and to accomplish an effect of reducing diffusion resistance of lithium ions, thereby realizing an effect of improving cycle capacity characteristics.

**(2) Non-Aqueous Organic Solvent**

The non-aqueous organic solvent is not particularly limited, as long as it causes minimized decomposition caused by oxidation during the charge/discharge cycles of a secondary battery and can realize desired properties in combination with additives. For example, carbonate-based organic solvents, ether-based organic solvents and ester-based organic solvents may be used alone or in combination.

Among such organic solvent, the carbonate-based organic solvent may include at least one of cyclic carbonate-based organic solvents and linear carbonate-based organic solvents. Particular examples of the cyclic carbonate-based organic solvent may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate and fluoroethylene carbonate (FEC). Particularly, the cyclic carbonate-based organic solvent may include a mixed solvent of ethylene carbonate having a high dielectric constant with propylene carbonate having a relatively lower melting point as compared to ethylene carbonate.

In addition, the linear carbonate-based organic solvent is an organic solvent having low viscosity and a low dielectric constant, and typical examples thereof may include at least one organic solvent selected from the group consisting of dimethyl carbonate (DMC), diethyl carbonate (DEC), dipropyl carbonate, ethyl methyl carbonate (EMC), methyl propyl carbonate and ethyl propyl carbonate. Particularly, the linear carbonate-based organic solvent may include dimethyl carbonate.

The ether-based organic solvent may include any one selected from the group consisting of dimethyl ether, diethyl ether, dipropyl ether, methyl ethyl ether, methyl propyl ether and ethyl propyl ether, or a mixture of two or more of them. However, the scope of the present disclosure is not limited thereto.

The ester-based organic solvent may include at least one selected from the group consisting of linear ester-based organic solvents and cyclic ester-based organic solvents.

Particular examples of the linear ester-based organic solvent may include any one organic solvent selected from the group consisting of methyl acetate, ethyl acetate, propyl acetate, methyl propionate, ethyl propionate, propyl propionate and butyl propionate, or a mixture of two or more of them. However, the scope of the present disclosure is not limited thereto.

Particular examples of the cyclic ester-based organic solvent may include any one organic solvent selected from the group consisting of γ-butyrolactone, γ-valerolactone, γ-caprolactone, σ-valerolactone and ε-caprolactone, or a mixture of two or more of them. However, the scope of the present disclosure is not limited thereto.

Among such ester-based solvents, the cyclic carbonate-based compound is a high-viscosity organic solvent and can dissociate the lithium salt in the electrolyte well, and thus may be used preferably. When using such a cyclic carbonate-based compound in the form of a mixture with a low-viscosity and low-dielectric linear carbonate-based compound and linear ester-based compound at a suitable mixing ratio, it is possible to prepare a gel polymer electrolyte having high electrical conductivity preferably.

Meanwhile, in the composition for a gel polymer electrolyte according to the present disclosure, the non-aqueous organic solvent may be used in such an amount that the solid content, including the lithium salt and the crosslinking agent, may be 70 wt% or less, particularly 50 wt% or less, and more particularly 10 wt% or less, based on the total weight of the composition for a gel polymer electrolyte.

**(3) Compound Represented by Chemical Formula 1**

The composition for a gel polymer electrolyte according to an embodiment of the present disclosure includes a compound represented by the following Chemical Formula 1:

[Chemical Formula 1]

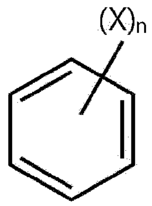

(wherein X is at least one halogen atom selected from the group consisting of F, Cl, Br and I, and n is an integer of 1-6).

As battery safety has become a big issue, it has been required for lithium polymer batteries to have higher safety. Particularly, when a cell ignites to cause additional damages to the adjacent cell and continuous ignition in a module or a pack, a big fire accident may occur. Therefore, there is a need for a technology capable of inhibiting ignition propagation caused by the ignition of a cell.

The inventors of the present disclosure have conducted intensive studies to solve the above-mentioned problem, and have focused on the fact that it is required to scavenge radicals generated during combustion in order to inhibit propagation upon the ignition of a cell. According to an embodiment of the present disclosure, a compound represented

by Chemical Formula 1 is introduced in order to scavenge the radicals. Particularly, when introducing the compound represented by Chemical Formula 1 to the composition for a gel polymer electrolyte, radicals generated at high temperature react with benzene radicals generated from halogenated benzene to perform radical scavenging. In addition, in a nickel-rich positive electrode, the number of oxygen radicals is reduced, while the active material collapses, but decomposition of the electrolyte caused thereby may also be reduced by the compound represented by Chemical Formula 1.

According to an embodiment of the present disclosure, the compound represented by Chemical Formula 1 may be halogenated benzene.

The compound represented by Chemical Formula 1 may be at least one selected from the group consisting of fluorobenzene, chlorobenzene, bromobenzene, iodobenzene, difluorobenzene, dichlorobenzene, dibromobenzene, diiodobenzene, trifluorobenzene, trichlorobenzene, tribromobenzene, triiodobenzene, tetrafluorobenzene, tetrachlorobenzene, tetrabromobenzene, tetraiodobenzene, fluorochlorobenzene, fluorobromobenzene, fluoroiodobenzene, chlorobromobenzene, chloroiodobenzene and bromoiodobenzene.

The compound represented by Chemical Formula 1 may be fluorobenzene, chlorobenzene, bromobenzene or iodobenzene.

The compound represented by Chemical Formula 1 may be fluorobenzene, difluorobenzene or trifluorobenzene. When such halogenated benzene has a fluoro group having the highest electronegativity, the radicals have high stability and can scavenge the radicals rapidly.

The compound represented by Chemical Formula 1 may be present in an amount of 10 vol% or more, 15 vol% or more, or 20 vol% or more, and 40 vol% or less, 35 vol% or less, or 30 vol% or less, based on the total volume of the non-aqueous organic solvent and the compound represented by Chemical Formula 1. For example, the compound represented by Chemical Formula 1 may be present in an amount of 10-30 vol%, 10-20 vol%, 15-30 vol%, or 15-20 vol%, based on the total volume of the non-aqueous organic solvent and the compound represented by Chemical Formula 1. When the compound represented by Chemical Formula 1 is present within the above-defined range, the electrolyte volatility is inhibited to improve the effect of inhibiting ignition propagation. Particularly, when the content of the compound represented by Chemical Formula 1 is smaller than 10 vol%, it is not possible to obtain a sufficient effect of inhibiting ignition propagation. On the other hand, when the content is larger than 40 vol%, the salt may be dissociated.

**(4) Polymerizable Compound**

In addition, the composition for a gel polymer electrolyte according to an embodiment of the present disclosure includes at least one polymerizable compound selected from the group consisting of a polymerizable monomer, oligomer and copolymer.

The inventors of the present disclosure have found the problem of high volatility of the compound represented by Chemical Formula 1 due to its low boiling point and low flash point, while conducting studies. For this, when the compound is introduced to a solvent in a small amount, it evaporates and is difficult to handle.

To solve the above-mentioned problem, the polymerizable compound is further introduced to the composition for a gel polymer electrolyte. The polymerizable compound can inhibit such volatile property of the compound represented by Chemical Formula 1, thereby inhibiting ignition propagation effectively.

The polymerizable compound, i.e. polymerizable monomer, oligomer or copolymer, is a compound which has a polymerizable functional group selected from the group consisting of vinyl, epoxy, allyl and (meth)acryl groups and capable of undergoing polymerization in its structure, and can be converted into a gel phase through polymerization or crosslinking. The polymerizable compound is not particularly limited, as long as it is used conventionally as a monomer, oligomer or copolymer for preparing a gel polymer electrolyte.

Particularly, non-limiting examples of the polymerizable monomer include, but are not limited to: tetraethylene glycol diacrylate, polyethylene glycol diacrylate (molecular weight 50-20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in combination.

In addition, typical examples of the copolymer include at least one selected from the group consisting of allyl 1,1,2,2-tetrafluoroethyl ether (TFE)-co-(2,2,2-trifluoroethyl acrylate), TFE-co-vinyl acetate, TFE-co-(2-vinyl-1,3-dioxolane), TFE-co-vinyl methacrylate, TFE-co-acrylonitrile, TFE-co-vinyl acrylate, TFE-co-methyl acrylate, TFE-co-methyl methacrylate (MMA) and TFE-co-2,2,2-trifluoroethyl acrylate (FA).

The polymerizable compound may be used in an amount of 0.01-10 wt%, or 1-8 wt%, based on the total weight of the composition for a gel polymer electrolyte. When the content of the polymerizable compound is larger than 10 wt%, gelling may occur in an excessively early time, while injecting the composition for a gel polymer electrolyte to a battery,

or the composition may become excessively dense to provide a gel having high resistance. On the contrary, when the content of the polymerizable compound is smaller than 0.01 wt%, gelling occurs hardly.

In addition, the weight average molecular weight (Mw) of the polymerizable compound may be controlled by the number of repeating units, and may be about 300-100,000 g/mol, particularly 1,000-50,000 g/mol, and more particularly 2,000-10,000 g/mol. When the oligomer has a weight average molecular weight within the above-defined range, it is possible to improve the mechanical strength of the gel polymer electrolyte including the oligomer effectively.

If the polymerizable compound has a weight average molecular of smaller than 300 g/mol, suitable mechanical strength cannot be expected, use of a larger amount of polymerization initiator is required to form a lot of crosslinking bonds, or a complicated additional polymerization process is required, thereby making the process for forming a gel polymer electrolyte complicated. Meanwhile, when the polymerizable compound has a weight average molecular weight of larger than 100,000 g/mol, the oligomer itself shows rigid property and is hardly soluble in the electrolyte solvent due to its reduced affinity with the electrolyte solvent, and thus formation of a homogeneous and high-quality gel polymer electrolyte cannot be expected.

The weight average molecular weight may be determined by using gel permeation chromatography (GPC). In addition, 'molecular weight' may refer to a weight average molecular weight, unless otherwise stated. For example, according to the present disclosure, the weight average molecular weight may be determined by using 1200 Series available from Agilent Technologies. Herein, PL MiniMixed B (Agilent) may be used as a column, and THF may be used as a solvent. Particularly, the weight average molecular weight may be determined under the following conditions; Column: PL MiniMixed B x 2, Solvent: THF, Flow rate: 0.3 mL/min, Sample concentration: 2.0 mg/mL, Injection amount: 10 μL, Column temperature: 40°C, Detector: Agilent RI detector, Standard: Polystyrene (corrected with tertiary function), and Data processing: ChemStation.

**(5) Polymerization Initiator**

The composition for a gel polymer electrolyte according to the present disclosure may include a polymerization initiator in order to carry out a radical reaction required for preparing a gel polymer electrolyte.

The polymerization initiator may include a conventional thermal polymerization initiator or photopolymerization initiator known to those skilled in the art. For example, the polymerization initiator may be decomposed by heat to form radicals and react with the crosslinking agent through free radical polymerization to form a gel polymer electrolyte.

More particularly, non-limiting examples of the polymerization initiator include, but are not limited to: organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azobis(2-cyanobutane), 2,2'-azobis(methylbutyronitrile), 2,2'-azobis(iso-butyronitrile) (AIBN) and 2,2'-azobisdimethyl valeronitrile (AMVN), or the like.

The polymerization initiator is decomposed by heat (e.g. heat of 30-100°C) or at room temperature (5-30°C) in a battery to form radicals, and a polymerizable oligomer reacts with an acrylate compound through free radical polymerization to form a gel polymer electrolyte.

The polymerization initiator may be used in an amount of 0.01-5 parts by weight, particularly 0.1-3 parts by weight, based on 100 parts by weight of the crosslinking agent.

When the polymerization initiator is used with a range of 0.01-5 parts by weight, it is possible to increase the conversion into a gel polymer so that gel polymer electrolyte properties may be ensured, and to prevent a pre-gelling reaction so that the wettability of an electrode with an electrolyte may be improved.

**(6) Additives**

In addition, the composition for a gel polymer electrolyte according to the present disclosure may further include supplementary additives capable of forming a more stable ion conductive coating film on the surface of an electrode, if necessary, in order to prevent decomposition of the non-aqueous electrolyte and a collapse of the negative electrode under a high-output environment, or to improve low-temperature high-rate discharge characteristics, high-temperature stability, overcharge-preventing effect, battery swelling-inhibiting effect at high temperature, or the like.

Particularly, typical examples of such supplementary additives may include at least one first additive selected from the group consisting of sultone-based compounds, sulfite-based compounds, sulfone-based compounds, sulfate-based compounds, halogen-substituted carbonate-based compounds, nitrile-based compounds, cyclic carbonate-based compounds, phosphate-based compounds, borate-based compounds and lithium salt-based compounds.

The sultone-based compounds may include at least one compound selected from the group consisting of 1,3-propane sultone (PS), 1,4-butane sultone, ethene sultone, 1,3-propene sultone (PRS), 1,4-butene sultone and 1-methyl-1,3-propene sultone, and may be used in an amount of 0.3-5 wt%, particularly 1-5 wt%, based on the total weight of the composition for a gel polymer electrolyte. When the content of the sultone-based compounds is larger than 5 wt% in the

composition for a gel polymer electrolyte, an excessively thick coating film may be formed on the surface of an electrode, resulting in an increase in resistance and degradation of output. Also, in this case, resistance may be increased due to such an excessive amount of additives in the composition for a gel polymer electrolyte to cause degradation of output characteristics.

The sulfite-based compounds may include at least one compound selected from the group consisting of ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimetyl propylene sulfite, 4,6-diethyl propylene sulfite and 1,3-butylene glycol sulfite, and may be used in an amount of 3 wt% or less, based on the total weight of the composition for a gel polymer electrolyte.

The sulfone-based compounds may include at least one compound selected from the group consisting of divinyl sulfone, dimethyl sulfone, diethyl sulfone, methyl ethyl sulfone and methyl vinyl sulfone, and may be used in an amount of 3 wt% or less, based on the total weight of the composition for a gel polymer electrolyte.

The sulfate-based compounds may include ethylene sulfate (Esa), trimethylene sulfate (TMS), or methyl trimethylene sulfate (MTMS), and may be used in an amount of 3 wt% or less, based on the total weight of the composition for a gel polymer electrolyte.

In addition, the halogen-substituted carbonate-based compounds may include fluoroethylene carbonate (FEC), and may be used in an amount of 5 wt% or less, based on the total weight of the composition for a gel polymer electrolyte. When the content of the halogen-substituted carbonate-based compounds is larger than 5 wt%, cell swelling quality may be degraded.

Further, the nitrile-based compounds may include at least one compound selected from the group consisting of succinonitrile, adiponitrile (Adn), acetonitrile, propionitrile, butyronitrile, veleronitrile, caprylonitrile, heptane nitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

The cyclic carbonate-based compounds may include vinylene carbonate (VC) or vinylethylene carbonate, and may be used in an amount of 3 wt% or less, based on the total weight of the composition for a gel polymer electrolyte. When the content of the cyclic carbonate-based compounds is larger than 3 wt%, cell swelling quality may be degraded.

The phosphate-based compounds may include at least one compound selected from the group consisting of lithium difluoro(bisoxalato)phosphate, lithium difluorophosphate ($LiPO_2F_2$), tetramethyl trimethylsilyl phosphate, trimethylsilyl phosphite, tris(2,2,2-trifluoroethyl) phosphate and tris(trifluoroethyl) phosphite, and may be used in an amount of 3 wt% or less, based on the total weight of the composition for a gel polymer electrolyte.

The borate-based compounds may include lithium oxalyl difluoroborate, and may be used in an amount of 3 wt% or less, based on the total weight of the composition for a gel polymer electrolyte.

The lithium salt-based compounds may include compounds different from the lithium salt contained in the non-aqueous electrolyte, and particularly, at least one compound selected from the group consisting of $LiPO_2F_2$, LiODFB, LiBOB (lithium bisoxalatoborate ($LiB(C_2O_4)_2$) and $LiBF_4$, and may be used in an amount of 3 wt% or less, based on the total weight of the composition for a gel polymer electrolyte.

Further, two or more of the supplementary additives may be used in combination, and the content of the supplementary additives may be 20 wt% or less, particularly 0.1-10 wt%, based on the total weight of the composition for a gel polymer electrolyte. When the content of the supplementary additives is smaller than 0.01 wt%, it is not possible to obtain sufficient effects of improving the low-temperature output, high-temperature storage characteristics and high-temperature life characteristics of a battery. When the content of the supplementary additives is larger than 20 wt%, excessive side reactions may occur in the composition for a gel polymer electrolyte during the charge/discharge of a battery due to an excessive amount of additives. Particularly, when the additives are added in an excessive amount, they cannot be decomposed sufficiently at high temperature, resulting in formation of unreacted materials or precipitation thereof in the electrolyte at room temperature. In this case, side-reactions may occur to cause degradation of the life or resistance characteristics of a secondary battery.

**Gel Polymer Electrolyte**

In another aspect of the present disclosure, there is provided a gel polymer electrolyte obtained by the polymerization of the composition for a gel polymer electrolyte through the polymerization process known to those skilled in the art.

The gelling method for preparing the gel polymer electrolyte according to the present disclosure is not particularly limited, and any conventional method known to those skilled in the art may be used.

Particularly, a composition for a gel polymer electrolyte including a lithium salt, a non-aqueous organic solvent, a crosslinking agent and a compound represented by the above Chemical Formula 1 is prepared, the composition is injected into a battery, and polymerization is carried out to obtain a gel polymer electrolyte including a polymer matrix. In a variant, after carrying out polymerization to form a polymer matrix, the polymer matrix may be further impregnated

with a non-aqueous electrolyte including an electrolyte salt and an organic solvent to obtain a gel polymer electrolyte.

The polymerization may be carried out by a thermal, e-beam and gamma-ray process. If the polymerization is thermal polymerization, the polymerization process requires about 1-8 hours and may be carried out at a temperature of 50-100°C.

Meanwhile, in the gelling process according to the related art, radical polymerization is carried out under an inert condition. Thus, there is a hassle of blocking oxygen in the air, which is a radical scavenger. According to an embodiment of the present disclosure, the composition for a gel polymer electrolyte includes the compound represented by Chemical Formula 1 as a radical scavenger, and thus there is an advantage in that polymerization for preparing a gel polymer electrolyte may be carried out even in the air or in the presence of oxygen. In other words, the compound represented by Chemical Formula 1 reduces the effect of oxygen during the polymerization and improves the reactivity of the crosslinking agent. Therefore, it is possible to enhance the extent of reaction to such a degree that there are almost no unreacted monomers. As a result, it is possible to improve the disadvantages of the related art, such as degradation of charge/discharge characteristics caused by the unreacted monomers remaining in a battery. Particularly, since the oxygen scavenger contains a flame-resistant functional group, it is possible to impart an effect of reinforcing the flame-resistance of the gel polymer electrolyte.

**Lithium Secondary Battery**

In still another aspect of the present disclosure, there is provided a lithium secondary battery including the gel polymer electrolyte. The lithium secondary battery may include a positive electrode including a positive electrode active material, a negative electrode including a negative electrode active material, a separator interposed between the positive electrode and the negative electrode.

Herein, the lithium secondary battery according to the present disclosure may be manufactured by a conventional method known to those skilled in the art. For example, the lithium secondary battery may be manufactured by interposing a porous separator between a positive electrode and a negative electrode, and injecting an electrolyte containing a lithium salt dissolved therein. Herein, each of the positive electrode, negative electrode and separator forming an electrode assembly may be any one used conventionally for manufacturing a lithium secondary battery.

**(1) Positive Electrode**

First, the positive electrode may be obtained by forming a positive electrode mixture layer on a positive electrode current collector. The positive electrode mixture layer may be formed by coating positive electrode slurry including a positive electrode active material, a binder, a conductive material and a solvent onto a positive electrode current collector, followed by drying and pressing.

The positive electrode current collector is not particularly limited, as long as it causes no chemical change in the corresponding battery and has conductivity. Particular examples of the positive electrode current collector may include stainless steel, aluminum, nickel, titanium, baked carbon, copper or stainless steel surface-treated with carbon, nickel, titanium or silver, or the like.

The positive electrode active material is a compound capable of reversible lithium intercalation/deintercalation, and particular examples thereof include lithium composite metal oxides containing at least one metal, such as cobalt, manganese, nickel or aluminum, and lithium. More particularly, the lithium composite metal oxides may include lithium-manganese oxides (e.g. $LiMnO_2$, $LiMn_2O_4$, etc.), lithium-cobalt oxides (e.g., $LiCoO_2$, etc.), lithium-nickel oxides (e.g., $LiNiO_2$, etc.), lithium-nickel-manganese oxides (e.g., $LiNi_{1-Y}Mn_YO_2$ (wherein 0 < Y < 1), $LiMn_{2-Z}Ni_ZO_4$ (wherein 0 < Z < 2)), lithium-nickel-cobalt oxides (e.g., $LiNi_{1-Y1}Co_{Y1}O_2$ (wherein 0 < Y1 < 1)), lithium-manganese-cobalt oxides (e.g., $LiCo_{1-Y2}Mn_{Y2}O_2$ (wherein 0 < Y2 < 1), $LiMn_{2-z1}Co_{z1}O_4$(wherein 0 < Z1 < 2)), lithium-nickel-manganese-cobalt oxides (e.g., $Li(Ni_pCo_qMn_{r1})O_2$(0 < p < 1, 0 < q < 1, 0 < r1 < 1, p + q + r1 = 1) or $Li(Ni_{p1}Co_{q1}Mn_{r2})O_4$(0 < p1 < 2, 0 < q1 < 2, 0 < r2 < 2, p1 + q1 + r2 = 2)), lithium-nickel-cobalt-transition metal (M) oxides (e.g., $Li(Ni_{p2}Co_{q2}Mn_{r3}MS_2)O_2$ (wherein M is selected from the group consisting of Al, Fe, V, Cr, Ti, Ta, Mg and Mo, and each of p2, q2, r3 and s2 represents the atomic proportion of each element satisfying 0 < p2 < 1, 0 < q2 < 1, 0 < r3 < 1, 0 < s2 < 1, and p2 + q2 + r3 + s2 = 1)), or the like, and any one compound, or two or more compounds of them may be used.

Particularly, the lithium composite metal oxides may include $LiCoO_2$, $LiMnO_2$, $LiNiO_2$, lithium nickel manganese cobalt oxides (e.g. $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like), or lithium nickel cobalt aluminum oxides (e.g., $Li(Ni_{0.8}Co_{0.15}Al_{0.05})O_2$, or the like) with a view to improvement of the capacity characteristics and stability of a battery.

The positive electrode active material may be used in an amount of 80-99 wt%, particularly 90-99 wt%, based on the total weight of the solid content in the positive electrode slurry.

The binder is an ingredient which assists binding between the active material and the conductive material and binding to the current collector. In general, the binder may be added in an amount of 1-30 wt% based on the total weight

of the solid content in the positive electrode slurry. Particular examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene-butadiene rubber, fluoro-rubber, various copolymers, or the like.

The conductive material may be added in an amount of 1-30 wt% based on the total weight of the solid content in the positive electrode slurry.

Such a conductive material is not particularly limited, as long as it causes no chemical change in the corresponding battery and has conductivity. Particular examples of the conductive material include: carbon powder, such as carbon black, acetylene black (or denka black), ketjen black, channel black, furnace black, lamp black or thermal black; graphite powder, such as natural graphite, artificial graphite or graphite having a well-developed crystal structure; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives.

The solvent may include an organic solvent, such as N-methyl-2-pyrrolidone (NMP), and may be used in such an amount that the solvent provides a desired level of viscosity, when the positive electrode active material and optionally the binder and the conductive material are incorporated thereto. For example, the solvent may provide a solid content of 50-95 wt%, preferably 70-90 wt%, in the positive electrode slurry including the positive electrode active material and optionally the binder and the conductive material.

**(2) Negative Electrode**

In addition, the negative electrode may be obtained by forming a negative electrode mixture layer on a negative electrode current collector. The negative electrode mixture layer may be formed by coating negative electrode slurry including a negative electrode active material, a binder, a conductive material and a solvent onto a negative electrode current collector, followed by drying and pressing.

The negative electrode current collector generally has a thickness of 3-500 μm. The negative electrode current collector is not particularly limited, as long as it has high conductivity, while not causing any chemical change in the corresponding battery. Particular examples of the negative electrode current collector include copper, stainless steel, aluminum, nickel, titanium, baked carbon, or copper or stainless steel surface-treated with carbon, nickel, titanium, silver, etc., aluminum-cadmium alloy, or the like. In addition, similarly to the positive electrode current collector, the negative electrode current collector may have fine surface irregularities formed on the surface thereof to increase the adhesion of a negative electrode active material, and may have various shapes, such as a film, a sheet, a foil, a net, a porous body, a foam or a non-woven web body.

In addition, the negative electrode active material may include at least one selected from the group consisting of a carbonaceous material capable of reversible lithium-ion intercalation/deintercalation, metal or alloy of metal with lithium, metal composite oxide, material capable of lithium doping/dedoping, and a transition metal oxide.

The carbonaceous material capable of reversible lithium-ion intercalation/deintercalation may include any carbonaceous negative electrode active material used currently in a lithium-ion secondary battery with no particular limitation. Typical examples of the carbonaceous material include crystalline carbon, amorphous carbon or a combination thereof. Particular examples of the crystalline carbon include graphite, such as amorphous, sheet-like, flake-like, spherical or fibrous natural graphite or artificial graphite, and particular examples of the amorphous carbon include soft carbon (low-temperature baked carbon) or hard carbon, mesophase pitch carbide, baked cokes, or the like.

The metal composite oxide that may be used is selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (wherein Me is Mn, Fe, Pb, Ge; Me' is Al, B, P, Si, element of Group 1, 2 or 3 in the Periodic Table, halogen; and $0 < x \leq 1$; $1 \leq y \leq 3$; and $1 \leq z \leq 8$).

The material capable of lithium doping/dedoping may include Si, $SiO_x$ ($0 < x < 2$), Si-Y alloy (wherein Y is an element selected from the group consisting of alkali metals, alkaline earth metals, Group 13 elements, Group 14 elements, transition metals, rare earth metal elements and combinations thereof, except Si), Sn, $SnO_2$, Sn-Y (wherein Y is an element selected from the group consisting of alkali metals, alkaline earth metals, Group 13 elements, Group 14 elements, transition metals, rare earth metal elements and combinations thereof, except Sn), or the like. At least one of such materials may be used in combination with $SiO_2$. Element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include lithium-containing titanium composite oxide (LTO), vanadium oxide, lithium vanadium oxide, or the like.

The negative electrode active material may be used in an amount of 80-99 wt%, based on the total weight of the solid content in the negative electrode slurry.

The binder is an ingredient which assists binding among the conductive material, the active material and the current collector. In general, the binder may be added in an amount of 1-30 wt%, based on the total weight of the solid content in the negative electrode slurry. Particular examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene-butadiene rubber, fluoro-rubber, various copolymers thereof, or the like.

The conductive material is an ingredient for further improving the conductivity of the negative electrode active material, and may be added in an amount of 1-20 wt%, based on the total weight of the solid content of the negative electrode slurry. The conductive material may be the same or different as the conductive material used for manufacturing the positive electrode. Particular examples of the conductive material include: carbon powder, such as carbon black, acetylene black (or denka black), ketjen black, channel black, furnace black, lamp black or thermal black; graphite powder, such as natural graphite, artificial graphite or graphite having a well-developed crystal structure; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives.

The solvent may include water or an organic solvent, such as NMP, alcohol, or the like, and may be used in such an amount that the solvent provides a desired level of viscosity when the negative electrode active material and optionally the binder and the conductive material are incorporated thereto. For example, the solvent may provide a solid content of 50-95 wt%, preferably 70-90 wt%, in the negative electrode slurry including the negative electrode active material and optionally the binder and the conductive material.

**(3) Separator**

Further, the separator functions to interrupt an internal short-circuit between both electrodes and to allow impregnation with an electrolyte. The separator may be prepared by mixing a polymer resin, a filler and a solvent to form a separator composition and coating the separator composition directly on the top of an electrode, followed by drying, to form a separator film. In a variant, the separator may be prepared by casting the separator composition on a support, followed by drying, and laminating the separator film separated from the support on the top of an electrode.

The separator may include a conventional porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, and such porous polymer films may be used alone or in the form of a laminate. Otherwise, a conventional porous non-woven web, such as a non-woven web made of high-melting point glass fibers, polyethylene terephthalate fibers, or the like, may be used with no particular limitation.

Herein, the porous separator may generally have a pore diameter of 0.01-50 $\mu$m and a porosity of 5-95%. In addition, the porous separator may generally have a thickness of 5-300 $\mu$m.

There is no particular limitation in the appearance of the lithium secondary battery according to an embodiment of the present disclosure. For example, the lithium secondary battery may have a cylindrical shape using a can, a prismatic shape, a pouch-like shape or a coin-like shape.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

(Preparation of Composition for Gel Polymer Electrolyte)

First, $LiPF_6$ was dissolved in a mixture of a non-aqueous organic solvent with a compound represented by Chemical Formula 1 having a composition of ethylene carbonate (EC) : ethyl propionate (EP) : fluorobenzene (FB) = 30 : 60 : 10 (volume ratio) to 1.0 M, thereby preparing 96.96 g of a non-aqueous electrolyte. Next, 3 g of trimethylolpropane triacrylate (weight average molecular weight: 3,000) as a polymerizable compound and 0.04 g of dimethyl 2,2'-azobis(2-methylpropionate) (CAS No. 2589-57-3) as a polymerization initiator were added to the non-aqueous electrolyte to prepare a composition for a gel polymer electrolyte.

(Manufacture of Lithium Secondary Battery)

First, 94 wt% of $LiNi_{1/3}Co_{1/3}Mn_{1/3}O_2$ (NCM) as a positive electrode active material, 3 wt% of carbon black as a conductive material and 3 wt% of polyvinylidene fluoride (PVDF) as a binder were added to N-methyl-2-pyrrolidone

(NMP) as a solvent to obtain positive electrode active material slurry (solid content: 50 wt%). The positive electrode active material slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain negative electrode active material slurry (solid content: 80 wt%). The negative electrode active material slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were stacked successively to obtain an electrode assembly. The electrode assembly was received in a battery casing, and the composition for a gel polymer electrolyte prepared as described above was injected thereto.

Then, the resultant structure was stored at room temperature for 2 days and heated at 65°C for 5 hours to obtain a lithium secondary battery including a thermally polymerized gel polymer electrolyte. The test results for the lithium secondary battery are shown in Table 1.

**Example 2**

A composition for a gel polymer electrolyte and a lithium secondary battery were obtained in the same manner as Example 1, except that the volume ratio of ethylene carbonate (EC) : ethyl propionate (EP) : fluorobenzene (FB) was controlled to 30 : 50 : 20 in preparing the composition for a gel polymer electrolyte. The test results for the lithium secondary battery are shown in Table 1.

**Example 3**

A composition for a gel polymer electrolyte and a lithium secondary battery were obtained in the same manner as Example 1, except that trimethylolpropane triacrylate as a polymerizable compound was used in an amount of 7 wt%, instead of 3 wt%, based on 100 wt% of the composition for a gel polymer electrolyte, in preparing the composition for a gel polymer electrolyte. The test results for the lithium secondary battery are shown in Table 1.

**Example 4**

A composition for a gel polymer electrolyte and a lithium secondary battery were obtained in the same manner as Example 2, except that trimethylolpropane triacrylate as a polymerizable compound was used in an amount of 7 wt%, instead of 3 wt%, based on 100 wt% of the composition for a gel polymer electrolyte, in preparing the composition for a gel polymer electrolyte. The test results for the lithium secondary battery are shown in Table 1.

**Comparative Example 1**

In Comparative Example 1, the halogenated benzene, the crosslinking agent and the polymerization initiator were not introduced in preparing the composition for an electrolyte, as compared to Example 1. In other words, a conventional non-aqueous electrolyte was prepared instead of a composition for a gel polymer electrolyte.

(Preparation of Non-Aqueous Electrolyte)

Particularly, a non-aqueous electrolyte was prepared as follows.

$LiPF_6$ was dissolved in a non-aqueous organic solvent having a composition of ethylene carbonate (EC) : ethyl propionate (EP) = 30 : 70 (volume ratio) to 1.0 M, thereby preparing 96.96 g of a non-aqueous electrolyte.

(Manufacture of Lithium Secondary Battery)

First, 94 wt% of $LiNi_{1/3}Co_{1/3}Mn_{1/3}O_2$ (NCM) as a positive electrode active material, 3 wt% of carbon black as a conductive material and 3 wt% of polyvinylidene fluoride (PVDF) as a binder were added to N-methyl-2-pyrrolidone (NMP) as a solvent to obtain positive electrode active material slurry (solid content: 50 wt%). The positive electrode active material slurry was applied to and dried on aluminum (Al) foil having a thickness of about 20 μm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain negative electrode active

material slurry (solid content: 80 wt%). The negative electrode active material slurry was applied to and dried on copper (Cu) foil having a thickness of 10 μm as a negative electrode current collector, followed by roll pressing, to obtain a negative electrode.

The positive electrode, the negative electrode and a separator including three layers of polypropylene/polyethylene/polypropylene (PP/PE/PP) were stacked successively to obtain an electrode assembly. The electrode assembly was received in a battery casing, and the nonaqueous electrolyte prepared as described above was injected thereto to obtain a lithium secondary battery (full cell).

The test results for the lithium secondary battery are shown in Table 1.

**Comparative Example 2**

In Comparative Example 2, the crosslinking agent and the polymerization initiator were not introduced in preparing the composition for an electrolyte, as compared to Example 1. In other words, a conventional non-aqueous electrolyte was prepared instead of a composition for a gel polymer electrolyte.

(Preparation of Non-Aqueous Electrolyte)

Particularly, a non-aqueous electrolyte was prepared as follows.

$LiPF_6$ was dissolved in a mixture of a non-aqueous organic solvent with a compound represented by Chemical Formula 1 having a composition of ethylene carbonate (EC) : ethyl propionate (EP) : fluorobenzene (FB) = 30 : 60 : 10 (volume ratio) to 1.0 M, thereby preparing 96.96 g of a non-aqueous electrolyte.

(Manufacture of Lithium Secondary Battery)

A lithium secondary battery was obtained in the same manner as Comparative Example 1, except that the non-aqueous electrolyte prepared as described above was used.

The test results for the lithium secondary battery are shown in Table 1.

**Comparative Example 3**

In Comparative Example 3, the crosslinking agent and the polymerization initiator were not introduced in preparing the composition for an electrolyte, as compared to Example 2. In other words, a conventional non-aqueous electrolyte was prepared instead of a composition for a gel polymer electrolyte.

(Preparation of Non-Aqueous Electrolyte)

Particularly, a non-aqueous electrolyte was prepared as follows.

$LiPF_6$ was dissolved in a mixture of a non-aqueous organic solvent with a compound represented by Chemical Formula 1 having a composition of ethylene carbonate (EC) : ethyl propionate (EP) : fluorobenzene (FB) = 30 : 50 : 20 (volume ratio) to 1.0 M, thereby preparing 96.96 g of a non-aqueous electrolyte.

(Manufacture of Lithium Secondary Battery)

A lithium secondary battery was obtained in the same manner as Comparative Example 1, except that the non-aqueous electrolyte prepared as described above was used. The test results for the lithium secondary battery are shown in Table 1.

**Comparative Example 4**

In Comparative Example 4, the halogenated benzene was not introduced in preparing the composition for an electrolyte, as compared to Example 1.

(Preparation of Composition for Gel Polymer Electrolyte)

Particularly, a composition for a gel polymer electrolyte was prepared as follows.

$LiPF_6$ was dissolved in a non-aqueous organic solvent having a composition of ethylene carbonate (EC) : ethyl propionate (EP) = 30 : 70 (volume ratio) to 1.0 M, thereby preparing 96.96 g of a non-aqueous electrolyte. Next, 3 g of trimethylolpropane triacrylate as a polymerizable compound and 0.04 g of dimethyl 2,2'-azobis(2-methylpropionate)

(CAS No. 2589-57-3) as a polymerization initiator were added to the non-aqueous electrolyte to prepare a composition for a gel polymer electrolyte.

(Manufacture of Lithium Secondary Battery)

A lithium secondary battery was obtained in the same manner as Example 1, except that the composition for a gel polymer electrolyte prepared as described above was used. The test results for the lithium secondary battery are shown in Table 1.

**Comparative Example 5**

In Comparative Example 5, the halogenated benzene was not introduced in preparing the composition for an electrolyte, as compared to Example 3.

(Preparation of Composition for Gel Polymer Electrolyte)

Particularly, a composition for a gel polymer electrolyte was prepared as follows.

$LiPF_6$ was dissolved in a non-aqueous organic solvent having a composition of ethylene carbonate (EC) : ethyl propionate (EP) = 30 : 70 (volume ratio) to 1.0 M, thereby preparing 92.96 g of a non-aqueous electrolyte. Next, 7 g of trimethylolpropane triacrylate as a polymerizable compound and 0.04 g of dimethyl 2,2'-azobis(2-methylpropionate) (CAS No. 2589-57-3) as a polymerization initiator were added to the non-aqueous electrolyte to prepare a composition for a gel polymer electrolyte.

(Manufacture of Lithium Secondary Battery)

A lithium secondary battery was obtained in the same manner as Example 1, except that the composition for a gel polymer electrolyte prepared as described above was used. The test results for the lithium secondary battery are shown in Table 1.

**Comparative Example 6**

In Comparative Example 6, the volume ratio of the non-aqueous organic solvent was controlled in preparing the composition for an electrolyte, as compared to Example 1.

(Preparation of Composition for Gel Polymer Electrolyte)

Particularly, a composition for a gel polymer electrolyte was prepared as follows.

$LiPF_6$ was dissolved in a mixture of a non-aqueous organic solvent with a compound represented by Chemical Formula 1 having a composition of ethylene carbonate (EC) : ethyl propionate (EP) : fluorobenzene (FB) = 30 : 67 : 3 (volume ratio) to 1.0 M, thereby preparing 96.96 g of a non-aqueous electrolyte. Next, 3 g of trimethylolpropane triacrylate as a polymerizable compound and 0.04 g of dimethyl 2,2'-azobis(2-methylpropionate) (CAS No. 2589-57-3) as a polymerization initiator were added to the non-aqueous electrolyte to prepare a composition for a gel polymer electrolyte.

(Manufacture of Lithium Secondary Battery)

A lithium secondary battery was obtained in the same manner as Example 1, except that the composition for a gel polymer electrolyte prepared as described above was used. The test results for the lithium secondary battery are shown in Table 1.

[Table 1]

| | Volume ratio of non-aqueous organic solvent or Volume ratio of non-aqueous organic solvent and compound represented by Chemical Formula 1 | Lithium salt | Content of polymerization initiator (based on 100 wt% of composition) | Content of crosslinking agent (based on 100 wt% of composition) | Electrolyte volatility (%) |
|---|---|---|---|---|---|
| Comp. Ex. 1 | EC/EP = 3/7 | $LiPF_6$ 1 M | 0 wt% | 0 wt% | 29.5% |

(continued)

| | Volume ratio of non-aqueous organic solvent or Volume ratio of non-aqueous organic solvent and compound represented by Chemical Formula 1 | Lithium salt | Content of polymerization initiator (based on 100 wt% of composition) | Content of crosslinking agent (based on 100 wt% of composition) | Electrolyte volatility (%) |
|---|---|---|---|---|---|
| Comp. Ex. 2 | EC/EP/FB = 3/6/1 | $LiPF_6$ 1 M | 0 wt% | 0 wt% | 37.1% |
| Comp. Ex. 3 | EC/EP/FB = 3/5/2 | $LiPF_6$ 1 M | 0 wt% | 0 wt% | 44.9% |
| Comp. Ex. 4 | EC/EP = 3/7 | $LiPF_6$ 1 M | 0.04 wt% | 3 wt% | 9.2% |
| Comp. Ex. 5 | EC/EP = 3/7 | $LiPF_6$ 1 M | 0.04 wt% | 7 wt% | 2.1% |
| Comp. Ex. 6 | EC/EP/FB = 30/67/3 | $LiPF_6$ 1 M | 0.04 wt% | 3 wt% | 9.5% |
| Ex. 1 | EC/EP/FB = 3/6/1 | $LiPF_6$ 1 M | 0.04 wt% | 3 wt% | 10.8% |
| Ex. 2 | EC/EP/FB = 3/5/2 | $LiPF_6$ 1 M | 0.04 wt% | 3 wt% | 11.3% |
| Ex. 3 | EC/EP/FB = 3/6/1 | $LiPF_6$ 1 M | 0.04 wt% | 7 wt% | 2.1% |
| Ex. 4 | EC/EP/FB = 3/5/2 | $LiPF_6$ 1 M | 0.04 wt% | 7 wt% | 2.5% |

**Test Examples**

**Test Example 1: Evaluation of Electrolyte Volatility**

The composition for a gel polymer electrolyte or a non-aqueous electrolyte according to each of Examples 1-4 and Comparative Examples 1-6 was taken in an amount of 5 g and exposed to the air at 25°C for 1 hour. A change in weight after 1 hour was calculated according to the following Formula 1:

[Formula 1]

Electrolyte volatility (%) = ((Initial weight of composition – Weight of composition after 1 hour) / Initial weight of composition) X 100

As can be seen from Comparative Examples 2 and 3 in Table 1, when the non-aqueous electrolyte includes halogenated benzene, it shows increased volatility. On the contrary, when using halogenated benzene and a crosslinking agent at the same time, according to Examples 1-4, the volatility of the non-aqueous organic solvent can be reduced significantly. In addition, it can be seen that as the content of the crosslinking agent is increased, the gel matrix has increased density, and the volatility is further inhibited.

**Test Example 2: Evaluation of Flame Resistance of Electrolyte**

The composition for a gel polymer electrolyte or a non-aqueous electrolyte according to each of Comparative Examples 1, 4, 5 and 6 and Example 4 was taken in an amount of 5 g and was ignited by using a torch, and then the appearance thereof 3 seconds after the ignition was observed. In addition, the results are shown in FIGS. 1a to 1e.

In the case of Comparative Example 1, continuous combustion is observed (FIG. 1a).

In the case of Comparative Examples 4, 5 and 6, the flame size is reduced but continuous combustion is observed (FIG. 1b, FIG. 1c and FIG. 1d). Particularly, in the case of Comparative Examples 4-6, even though the electrolyte volatility may be inhibited, oxygen radicals generated by halogenated benzene cannot be scavenged, and thus ignition cannot be inhibited.

In the case of Example 4, self-extinguishment can be accomplished upon the spark ignition (FIG. 1e).

**Test Example 3: Evaluation of Safety through Nail Penetration Test**

Each of the lithium secondary batteries according to Example 4 and Comparative Examples 5 and 6 was fully charged at room temperature to 4.4 V, and a nail penetration test was carried out under the condition of GB/T (nail diameter 2.5 mm, penetration speed 6 m/min). The test results are shown in FIG. 2 to FIG. 4.

Referring to FIG. 2, it can be seen that when no halogenated benzene is introduced according to Comparative Example 5, spark occurs after nail penetration (FIG. 2(a)), and continuous ignition is observed after nail penetration (FIG. 2(b) to FIG. 2(d)).

Referring to FIG. 3, it can be seen that when the content of halogenated benzene does not satisfy the range defined according to the present disclosure, in Comparative Example 6, spark occurs after nail penetration (FIG. 3(a)), and continuous ignition is observed after nail penetration (FIG. 3(b) to FIG. 3(d)).

Referring to FIG. 4, it can be seen that when halogenated benzene and a crosslinking agent are introduced according to Example 4, although spark occurs after nail penetration (FIG. 4(a)), the battery combusts after nail penetration with no spark (FIG. 4(b) to FIG. 4(d)).

**Claims**

1. A composition for a gel polymer electrolyte, comprising: a lithium salt; a non-aqueous organic solvent; a polymerization initiator; at least one polymerizable compound selected from the group consisting of a polymerizable monomer, oligomer and copolymer; and a compound represented by the following Chemical Formula 1, wherein the compound represented by Chemical Formula 1 is present in an amount of 10 vol% or more, based on the total volume of the non-aqueous organic solvent and the compound represented by Chemical Formula 1:

[Chemical Formula 1]

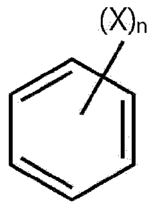

wherein X is at least one halogen atom selected from the group consisting of F, Cl, Br and I, and n is an integer of 1-6.

2. The composition for a gel polymer electrolyte according to claim 1, wherein the compound represented by Chemical Formula 1 is at least one selected from the group consisting of fluorobenzene, chlorobenzene, bromobenzene, iodobenzene, difluorobenzene, dichlorobenzene, dibromobenzene, diiodobenzene, trifluorobenzene, trichlorobenzene, tribromobenzene, triiodobenzene, tetrafluorobenzene, tetrachlorobenzene, tetrabromobenzene, tetraiodobenzene, fluorochlorobenzene, fluorobromobenzene, fluoroiodobenzene, chlorobromobenzene, chloroiodobenzene and bromoiodobenzene.

3. The composition for a gel polymer electrolyte according to claim 1, wherein the compound represented by Chemical Formula 1 is present in an amount of 10-30 vol%, based on the total volume of the non-aqueous organic solvent and the compound represented by Chemical Formula 1.

4. The composition for a gel polymer electrolyte according to claim 2, wherein the compound represented by Chemical Formula 1 is fluorobezene, chlorobenzene, bromobenzene or iodobenzene.

5. The composition for a gel polymer electrolyte according to claim 1, wherein the polymerizable compound has a

polymerizable functional group selected from the group consisting of vinyl, epoxy, allyl and (meth)acryl groups, and is a compound that can be converted into a gel phase through polymerization or crosslinking.

**6.** The composition for a gel polymer electrolyte according to claim 1, wherein the polymerizable compound has a weight average molecular weight (Mw) of 300-100,000 g/mol.

**7.** The composition for a gel polymer electrolyte according to claim 1, wherein the polymerizable compound is present in an amount of 0.01-10 wt%, based on the total weight of the composition for a gel polymer electrolyte.

**8.** The composition for a gel polymer electrolyte according to claim 1, wherein the non-aqueous organic solvent comprises at least one solvent selected from the group consisting of carbonates, esters and ethers.

**9.** The composition for a gel polymer electrolyte according to claim 8, wherein the carbonate solvent is a mixed solvent of a linear carbonate with a cyclic carbonate.

**10.** The composition for a gel polymer electrolyte according to claim 9, wherein the cyclic carbonate comprises any one selected from ethylene carbonate, propylene carbonate, 1,2-butylene carbonate, 2,3-butylene carbonate, 1,2-pentylene carbonate, 2,3-pentylene carbonate, vinylene carbonate, vinyl ethylene carbonate, fluoroethylene carbonate and halides thereof, or a mixture of two or more of them.

**11.** The composition for a gel polymer electrolyte according to claim 9, wherein the linear carbonate comprises any one selected from dimethyl carbonate (DMC), diethyl carbonate (DEC), dipropyl carbonate (DPC), ethyl methyl carbonate (EMC), methyl propyl carbonate (MPC), ethyl propyl carbonate (EPC) and halides thereof, or a mixture of two or more of them.

**12.** The composition for a gel polymer electrolyte according to claim 8, wherein the non-aqueous organic solvent is a mixed solvent of a cyclic carbonate with a linear ester.

**13.** The composition for a gel polymer electrolyte according to claim 12, wherein the linear ester comprises any one selected from methyl acetate, ethyl acetate, propyl acetate, methyl propionate, ethyl propionate, propyl propionate and butyl propionate, or a mixture of two or more of them.

**14.** The composition for a gel polymer electrolyte according to claim 1, wherein the lithium salt comprises $Li^+$, as a cation, and at least one selected from the group consisting of $F^-$, $Cl^-$, $Br^-$, $I^-$, $NO_3^-$, $N(CN)_2^-$, $BF_4^-$, $ClO_4^-$, AlO4-, $AlCl_4^-$, $PF_6^-$, $SbF_6^-$, $AsF_6^-$, $BF_2C_2O_4^-$, $BC_4O_8^-$; $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $CF_3(CF_2)_7SO_3^-$, $CF_3CO_2^-$, $CH_3CO_2^-$, $SCN^-$ and $(CF_3CF_2SO_2)_2N^-$, as an anion.

**15.** A gel polymer electrolyte formed by polymerizing the composition for a gel polymer electrolyte as defined in claim 1.

**16.** A lithium secondary battery comprising a negative electrode, a positive electrode, a separator interposed between the negative electrode and the positive electrode, and the gel polymer electrolyte as defined in claim 15.

FIG. 1a

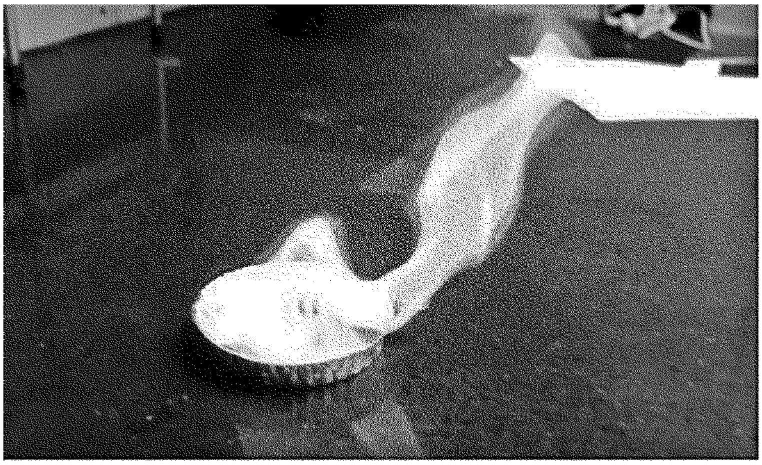

FIG. 1b

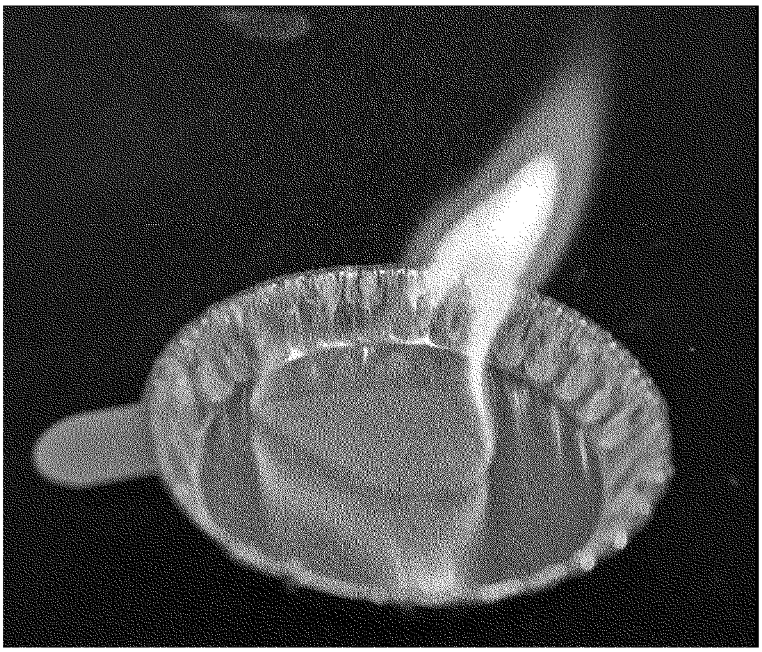

FIG. 1c

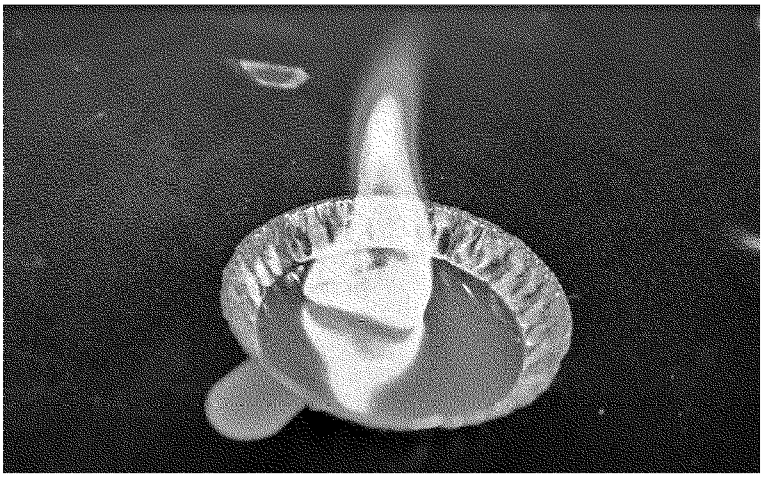

FIG. 1d

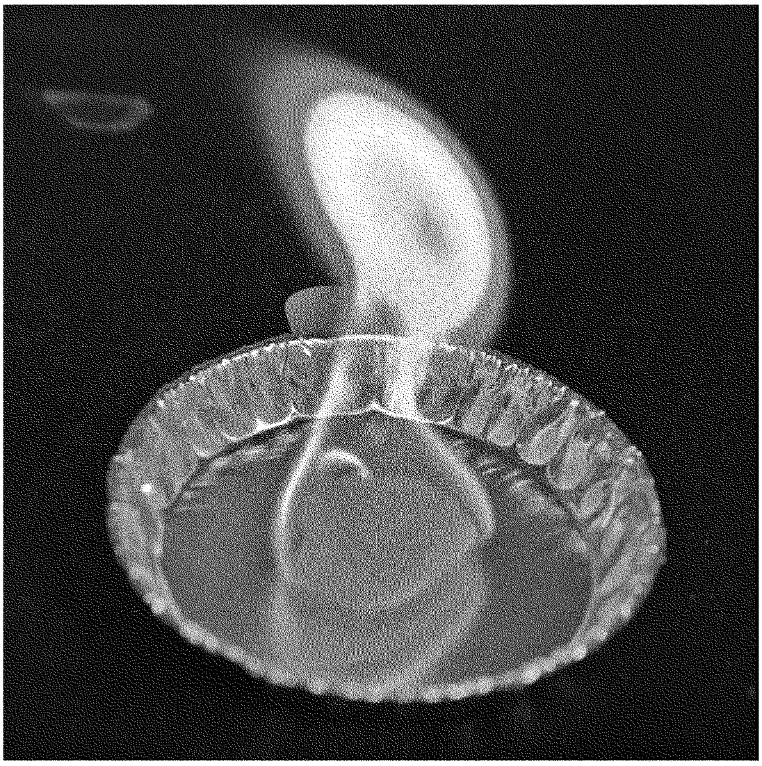

FIG. 1e

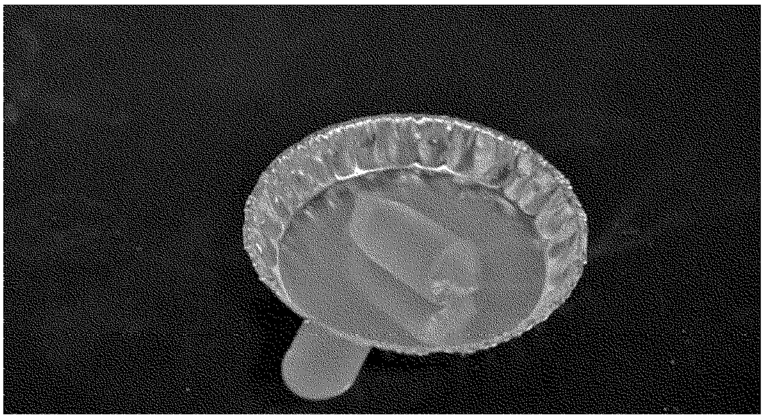

FIG. 2

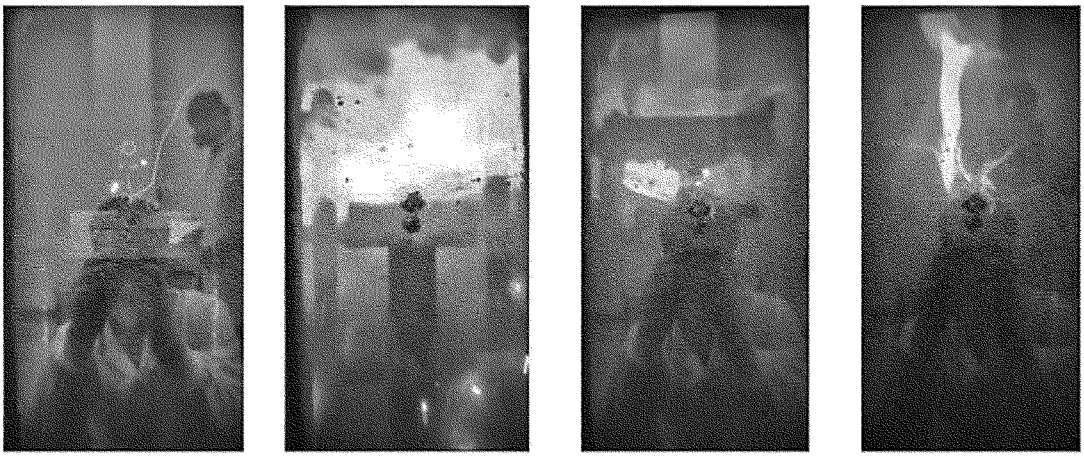

(a) (b) (c) (d)

FIG. 3

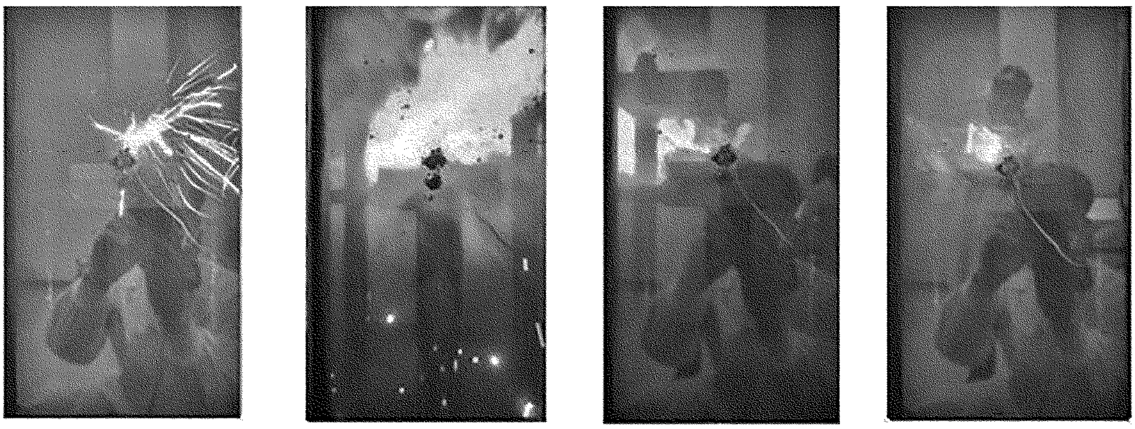

(a) (b) (c) (d)

FIG. 4

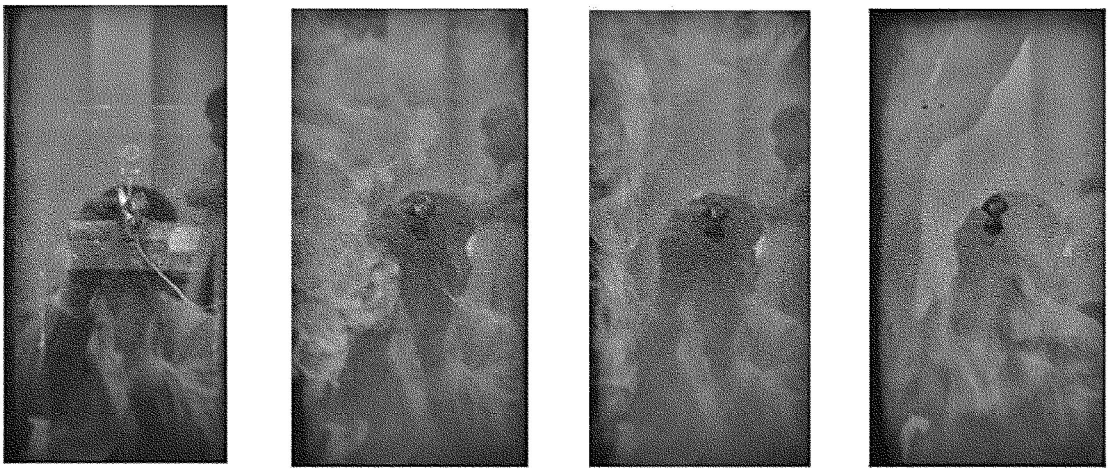

(a) (b) (c) (d)

## INTERNATIONAL SEARCH REPORT

International application No.
**PCT/KR2021/012871**

**A. CLASSIFICATION OF SUBJECT MATTER**

**H01M 10/0565**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0565(2010.01); H01M 10/05(2010.01); H01M 10/052(2010.01); H01M 10/0525(2010.01); H01M 10/0567(2010.01); H01M 10/0569(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 겔 폴리머 전해질(gel polymer electrolyte), 유기 용매 (organic solvent), 중합 개시제(polymerization initiator), 단량체(monomer), 할로겐화 벤젠(halogenated benzene)

**C. DOCUMENTS CONSIDERED TO BE RELEVANT**

| Category* | Citation of document, with indication, where appropriate, of the relevant passages | Relevant to claim No. |
|---|---|---|
| X | KR 10-0571267 B1 (SAMSUNG SDI CO., LTD.) 13 April 2006 (2006-04-13)<br>See claims 1, 3, 7-10, 12, 14 and 18; paragraphs [0029], [0030], [0033] and [0043]; and example 1. | 1-16 |
| X | KR 10-0805123 B1 (SAMSUNG SDI CO., LTD.) 21 February 2008 (2008-02-21)<br>See claims 1, 5, 7 and 9-15; paragraphs [0048]-[0052]; and example 1. | 1-16 |
| X | KR 10-2008-0086638 A (SAMSUNG SDI CO., LTD.) 26 September 2008 (2008-09-26)<br>See claims 1, 5-12 and 14; paragraphs [0027]-[0036] and [0058]; and example 1. | 1-16 |
| X | KR 10-2020-0034635 A (LG CHEM, LTD.) 31 March 2020 (2020-03-31)<br>See claims 1, 3, 10 and 11; and paragraphs [0081], [0082], [0095]-[0098], [0152], [0166]-[0168], [0171] and [0182]. | 1-16 |
| A | CN 102064342 A (DONGGUAN SHANSHAN BATTERY MATERIALS CO., LTD.) 18 May 2011 (2011-05-18)<br>See claim 1; and paragraph [0007]. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 December 2021** | **30 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/012871**

| Patent document cited in search report | Publication date (day/month/year) | Patent family member(s) | Publication date (day/month/year) |
|---|---|---|---|
| KR 10-0571267 B1 | 13 April 2006 | None | |
| KR 10-0805123 B1 | 21 February 2008 | US 2008-0292972 A1 | 27 November 2008 |
| | | US 8110305 B2 | 07 February 2012 |
| KR 10-2008-0086638 A | 26 September 2008 | KR 10-1340031 B1 | 10 December 2013 |
| KR 10-2020-0034635 A | 31 March 2020 | CN 112567557 A | 26 March 2021 |
| | | EP 3826096 A1 | 26 May 2021 |
| | | EP 3826096 A1 | 27 October 2021 |
| | | US 2021-0359342 A1 | 18 November 2021 |
| | | WO 2020-060293 A1 | 26 March 2020 |
| CN 102064342 A | 18 May 2011 | CN 102064342 B | 13 March 2013 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200120923


### Non-patent literature cited in the description


- *CHEMICAL ABSTRACTS,* 2589-57-3